# EUROPEAN PATENT APPLICATION

(11) **EP 1 251 660 A2**
(43) Date of publication of application: **23.10.2002**
(21) Application number: 02008317.6
(22) Date of filing: 11.04.2002
(51) Int. Cl.: H04L 12/46, H04L 12/66

(54) **Gateway system and integrated management method**

(30) Priority: 11.04.2001 JP 2001112082
(71) Applicant: NEC CORPORATION, Tokyo (JP)
(72) Inventor: Suzuki, Ken, Minato-ku, Tokyo (JP)
(74) Representative: Glawe, Delfs, Moll & Partner

(57) **Abstract**

A gateway system which provides a scalable function and a high performance, includes a signaling gateway 1, an SG common management unit 2, a call agent 3, and an SS7 signal network 100. The signaling gateway 1 includes a plurality of signaling gateway processors 11 - 14 each of which performs a signal transformation between the SS7 signal network 100 and an IP network. The signaling gateway processors 11 - 14 are connected to the SS7 signal network 100 by SS7 side signal distribution paths 101 - 104, and connected to the agent 3 by IP side signal distribution paths 111 - 114. The SG common management unit 2 manages fault information of input/output signal paths (the SS7 side signal distribution paths 101 - 104 and the IP side signal distribution paths 111 - 114), states of the signal gateway processors 11 - 14, and routing information.

## Description

### BACKGROUND OF THE INVENTION:

### Field of the Invention

The invention relates to a gateway system and an integrated management method used in the gateway system, in particular to an integrated management method of addition, removal, ox replacement of a signaling gateway in the gateway system.

### Description of the Related Art

Conventionally, whenever a signaling gateway (SG, hereinafter, referred to as a "gateway") or a call agent (CA, hereinafter, referred to as an "agent") which connects an existing telephone network and an IP (Internet Protocol) network is added, removed, or replaced in a network, it is required to register information about existing gateways or agents to the added, or replaced gateway or agent.

For example, when an existing gateway is connected to existing agents which compose an ACT-STANDBY system in which some agents are active and the other are inactive and standby, and when a gateway is added to the ACT-STANDBY system, the added gateway must collect address information of the existing gateway and the existing agents and information such as which agent is activated as an ACT system, or which agent standby as a STANDBY system. Therefore, a lot of troubles occur in adding, removing, or replacing the gateway or the agent.

Further, in a conventional management method, address information of the gateway and the agent must be established by the gateway and the agent themselves. And also, it is required to perform a duplication check between established information.

Still further, in a conventional network, a concrete method of a load distributing at the gateway is not realized. And therefore, it is difficult to provide an enough system volume depending upon an IP network.

Also, in the conventional network, as described above, whenever a gateway or an agent is added, removed, or replaced, it is required to register information of existing gateways and existing agents to the added, or replaced gateway or agent, thus there is a problem that an operation of adding, removing, or replacing of the gateway or the agent is troublesome.

Furthermore, in the conventional network, address information assigned to each gateway or each agent must be established by themselves, and it is required to perform a duplication check between established information.

### SUMMARY OF THE INVENTION:

Therefore, it is an object of the invention to provide a gateway system and an integrated management method which are capable of overcoming the above problems, realizing a scalable function, and providing a high performance.

According to a first aspect of the invention, there is provided a gateway system which uses at least one signaling gateway connecting an existing telephone network and an IP (Internet Protocol) network. The system comprises a plurality of signal transform units each of which is included in one of the signaling gateways and performs mutual transformation of signals between the existing telephone network and the IP network, and a common management unit which collectively manages information required for the mutual transformation performed by each signal transform unit.

According to a second aspect of the invention, there is provided a gateway system comprising (1) n (n is greater than or equal to one) of signaling gateways which connect an existing telephone network and an IP (Internet Protocol) network, (2) m (m is greater than or equal to one) of call agents which perform a call control on the IP network by using an interface for the existing telephone network, (3) a plurality of signal transform units each of which is included in one of the n of signaling gateways and performs mutual transformation of signals between the existing telephone network and the IP network, (4) and a common management unit which collectively manages information required for the mutual transformation performed by each signal transform unit.

According to a third aspect of the invention, there is provided a gateway system comprising (1) n (n is greater than or equal to one) of signaling gateways which connect an existing telephone network and an IP (Internet Protocol) network, (2) m (m is greater than or equal to one) of call agents which perform a call control on the IP network by using an interface for the existing telephone network, and (3) a common management unit which individually assigns setting information to the n of signaling gateways and the m of call agents.

According to a fourth aspect of the invention, there is provided an integrated management method of a gateway system which uses at least one signaling gateway connecting an existing telephone network and an IP (Internet Protocol) network. The method comprises the steps of (1) mutually transforming, at a plurality of signal transform units each of which is included in one of the signaling gateways, signals between the existing telephone network and the IP network, and (2) collectively managing information required for the mutual transformation.

According to a fifth aspect of the invention, there is provided an integrated management method of a gateway system which includes n (n is greater than or equal to one) of signaling gateways which connect an existing telephone network and an IP (Internet Protocol) network, and m (m is greater than or equal to one) of call agents which perform a call control on the IP network by using an interface for the existing telephone network. The method comprises the steps of (1) mutually transforming, at a plurality of signal transform units each of which is included in one of the n of signaling gateways, signals between the existing telephone network and the IP network, and (2) collectively managing information required for the mutual transformation.

According to a sixth aspect of the invention, there is provided an integrated management method of gateway system which uses n (n is greater than or equal to one) of signaling gateways which connect an existing telephone network and an IP (Internet Protocol) network, and m (m is greater than or equal to one) of call agents which perform a call control on the IP network by using an interface for the existing telephone network. The method comprises the step of individually assigning setting information to the n of signaling gateways and the m of call agents.

That is, the gateway system according to the invention includes an SG common management unit, and a plurality of signaling gateway processors which perform signal transformation of the signaling gateway in a form of a signaling gateway system configuration, thereby, a scalable function and a load distribution to the plurality of signaling gateway processors are provided.

Further, according to the invention, a network state or maintenance information can be collectively managed, since the SG common management unit uniformly manages information about the plurality of signaling gateway processors and call agents. Thereby, it can be easily to construction of a network including addition, removal, and replacement of units on the network.

In a conventional network, a load distribution is not made at a signaling gateway, therefore, it is difficult to provide enough system volume required for an IP network.

In the gateway system of the invention, according to an amount of traffic of SS7, signals are distributed to predetermined signaling gateway processors. It is, therefore, capable of building a scalable system.

Also, in a conventional management method of the invention, whenever a signaling gateway or a call agent is added to, or removed from the existing network or replaced, setting information of the added, removed, or replaced signaling gateway or call agent must be registered to all the signaling gateways and all the call agents in the network.

For example, in adding a signaling gateway, when a call agent connected to the existing signaling gateway is configured as ACT-STANDBY system, address information of each signaling gateway and each call agent must be collected. Further, information about which call agent works as ACT system and which call agent works as STANDBY system must be collected, therefore, it takes a lot of time to manage addition ox removal of unit in the network.

In the gateway system of the invention, the SG common management unit stores information about all of signaling gateways and call agents in the network, and the information is shared. Thereby, it is easy to apply a gateway function according to a change of a network structure such as addition or removal of the signaling gateway or the call agent.

Further, in the conventional management method, address information to be assigned to the signaling gateways and the call agents must be established by each unit, and a duplication check of setting information is also required.

In the gateway system of the invention, to overcome the problem, the SG common management unit is introduced. Specifically, the SG common management unit identifies setting information which is unused, and assigns it to the signaling gateway, the signaling gateway processor corresponding to the signaling gateway, and the call agent. By using the above method, it is capable of preventing a duplication check of setting information and simplifying setting of the related units.

Therefore, according to the invention, it is capable of (1) realizing a scalable function by incorporating a load distribution function, a switching function, and a returning function, (2) easily increasing a system volume by arranging IP network connecting abilities of a signaling gateway network in a stacked form, (3) easily performing an addition or a removal by maintaining a management part uniformly, (4) easily configuring a flexible network structure such as an ACT-STANDBY system, (5) enabling each unit not to have setting information by automatically assigning the setting information in building a network structure, (6) easily performing an addition or a removal by using a plug and play function, and (7) realizing further load distribution when a unit is added to the network.

### BRIEF DESCRIPTION OF THE DRAWINGS:

Fig. 1 shows a block diagram representing an example of a network structure of a first embodiment of the invention;
Fig. 2 shows an example of setting information file used by an SG common management unit shown in Fig. 1;
Fig. 3 shows a data structure of an IP packet data received from or sent by a call agent shown in Fig. 1;
Fig. 4 shows a flowchart of an operation in the network according to the first embodiment of the invention;
Fig. 5 shows a flowchart of another operation in the network according to the first embodiment of the invention;
Fig. 6 shows a flowchart of still another operation in the network according to the first embodiment of the invention;
Fig. 7 shows a flowchart of still another operation in the network according to the first embodiment of the invention;
Fig. 8 shows a block diagram representing an example of a network structure of a second embodiment of the invention;
Fig. 9 shows a flowchart of an operation in the network according to the second embodiment of the invention;
Fig. 10 shows a flowchart of another operation in the network according to the second embodiment of the invention;
Fig. 11 shows a signal path when a call agent is added to the network according to the second embodiment of the invention; and
Fig. 12 shows a signal path when a signaling gateway is added to the network according to the second embodiment of the invention;

### DESCRIPTION OF THE PREFERRED EMBODIMENT:

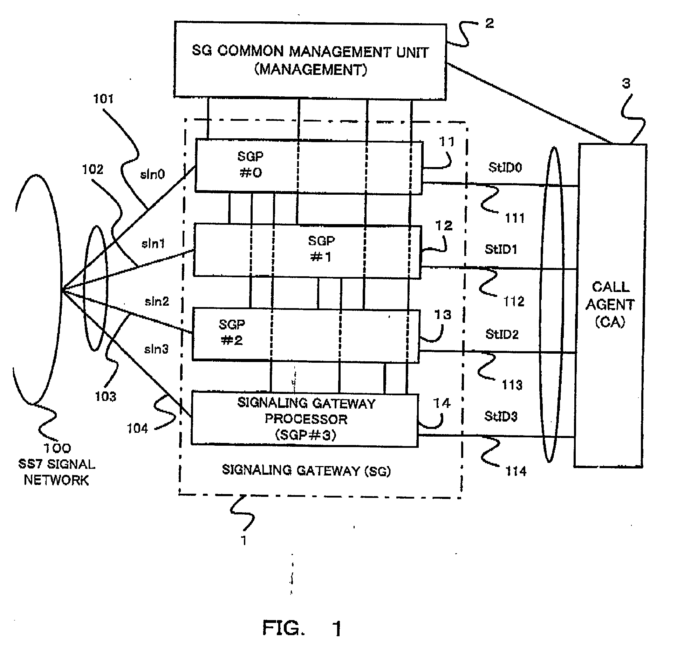

First, description is made about a first embodiment of the invention. Fig. 1 shows a block diagram representing a network structure according to the first embodiment of the invention. In Fig. 1, the network includes an SS7 (Signaling System No. 7 (No. 7 common channel signaling)) signal network 100, a signaling gateway (SG, hereinafter, referred to as a "gateway") 1 which connects an existing telephone network and an IP (Internet Protocol) network, an SG common management unit (management) 2, and a call agent (CA, hereinafter, referred to as an "agent") 3.

The gateway 1 includes a plurality of signaling gateway processors (SGP#O to #3) 11 - 14 each of which transforms signals between the SS7 network and the IP network (not shown). The signaling gateway processors 11 - 14 are connected to each other and connected to the SG common management unit.

Also, the signaling gateway processors 11 - 14 are connected to the SS7 signal network 100 via SS7 side signal distribution paths (sln0 - sln3) 101 - 104, and connected to the agent 3 via IP side signal distribution paths (StIDO - StID3) 111 - 114.

In this case, the signaling gateway processors 11 - 14 are composed to select input/output paths to the SS7 signal network 100 and the agent 3 based on an input/output management table (not shown). A structure of the signaling gateway processors 11 - 14 is not limited to the illustration. Each of the signaling gateway processors 11 - 14 can be realize by using a hardware, a software, or a firmware.

The SG common management unit 2 manages fault information of input/output signal paths (the SS7 side signal distribution paths 101 - 104, the IP side signal distribution paths 111 - 114), states of the signaling gateway processors 11 - 14, and routing information by using the corresponding table (not shown). Also, when the SG common management unit 2 updates contents of a routing table (not shown) which stores the routing information, the unit 2 sends the updated contents of the routing table to the signaling gateway processors 11 - 14.

The agent 3 performs, on the IP network, a call control operation based on SS7 which is an interface for a public telephone network. Thereby, IP packet data from the gateway 1 are sent to the IP network, and IP packet data from the IP network are sent to the gateway 1.

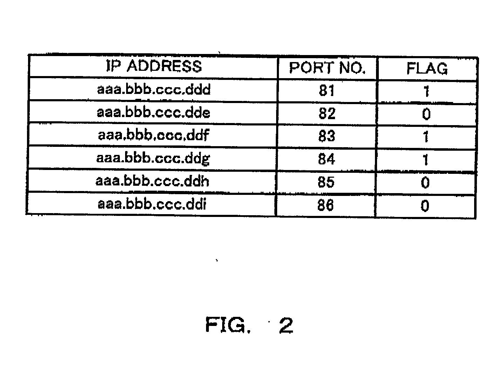

Fig. 2 shows an example of a setting information file used by the SG common management unit 2 shown in Fig. 1. In Fig. 2, the setting information file stores IP addresses "aaa.bbb.ccc.ddd", "aaa.bbb.ccc.dde", "aaa.bbb.ccc.ddf", "aaa.bbb.ccc.ddg", "aaa.bbb.ccc.ddh", and "aaa.bbb.ccc.ddi", port numbers "81", "82", "83", "84", "85", and "86", and flags "1" and "0".

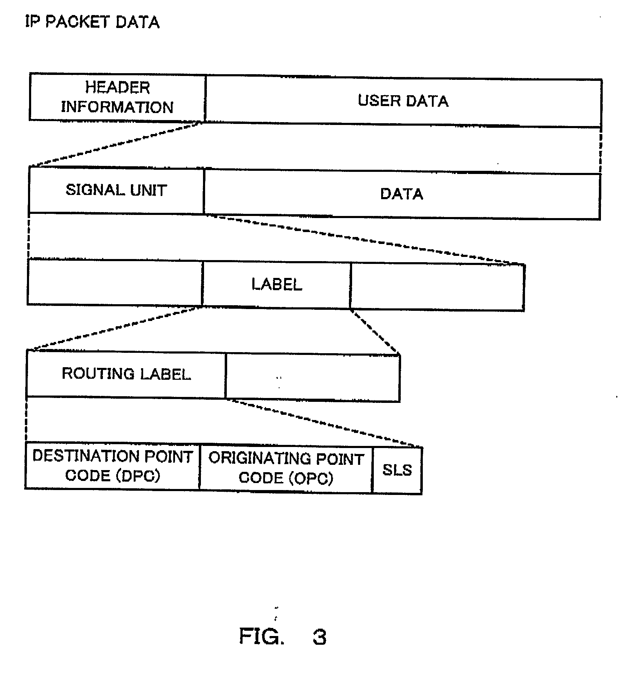

Fig. 3 shows data structures of IP packet data received from or sent by the agent 3 shown in Fig. 1. In Fig. 3, the IP packet data include header information and user data, and the user data include a signal unit and data.

The signal unit includes a label, and the label includes a routing label. The routing label is composed of a destination point code (DPC), an originating point code (OPC), and an SLS (Signaling Link Selection). The SLS is used to perform a load distribution when a plurality of paths (routes) are selective.

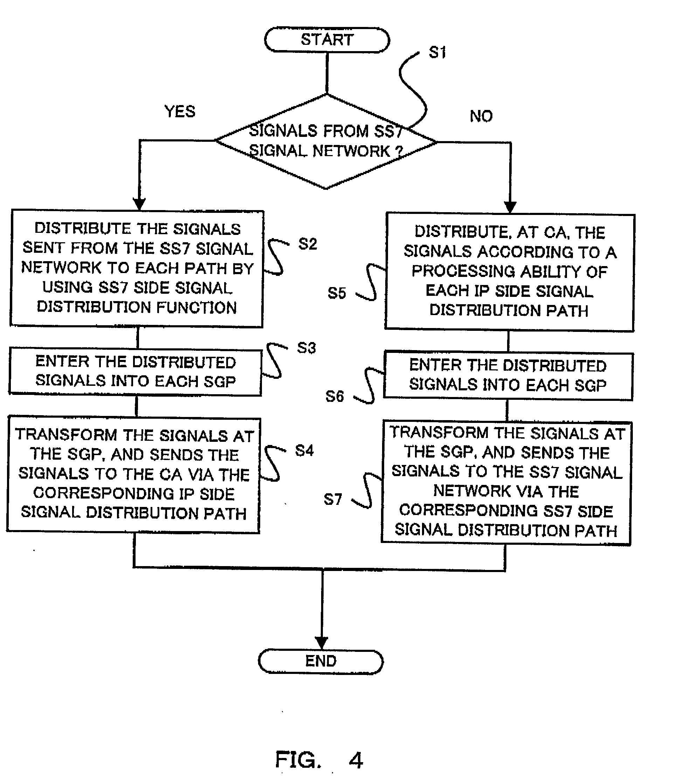

Each of Figs. 4 - 7 shows a flowchart representing an operation in the network according to the first embodiment of the invention. Description is made about operations in the network, with reference to Figs. 4 - 7.

Signals sent from the SS7 side signal network 100 are transferred to the gateway 1 via the SS7 side signal distribution paths 101 - 104, and signal transformation of the signals is performed by the gateway 1. After that, the transformed signals are sent to the agent 3 via the IP side signal distribution paths 111 - 114.

On the contrary, signals sent from the agent 3 are transferred to the gateway 1 via the IP side signal distribution paths 111 - 114, and signal transformation of the signals is performed by the gateway 1. After that, the transformed signals are sent to the SS7 signal network 100 via the SS7 side signal distribution paths 101 - 104.

In the following explanation, it is assumed that a path is selected beginning at the SS7 signal network 100 to the agent 3 via the gateway 1. Also, in the network structure shown in the embodiment, four SS7 side signal distribution paths 101 - 104, four signaling gateway processors 11 - 14 (the number of the signaling gateway processors is the same as the number of the SS7 side signal distribution paths), and four IP side signal distribution paths 111 - 114 (the number of the IP side signal distribution paths is the same as the number of the SS7 side signal distribution paths) are placed. Further, there is a one-to-one correspondence between the four SS7 side signal distribution paths 101 - 104 and the four IP side signal distribution paths 111 - 114 via the signaling gateway processors 11 - 14 in a normal state. However, an alternate path can be used when a fault occurs in a signal path.

Signals sent from the SS7 signal network 100 (step S1 in Fig. 4) are distributed to the SS7 side signal distribution paths 101 - 104 (step S2 in Fig. 4) by a SS7 signal distribution function (not shown). Thus, a load distribution is performed in the SS7 side.

Then, the distributed signals are entered into each signaling gateway processors 11 - 14 in the gateway 1 (step S3 in Fig. 4), and are transformed by the corresponding signaling gateway processors 11 - 14 (SS7 signal network side signal -> IP network side signal). Then, the transformed signals are sent to the agent 3 via the corresponding IP side signal distribution paths 111 - 114 (step S4 in Fig. 4).

On the contrary, signals sent from the agent 3 (step S1 in Fig. 4) are distributed according to a process of the IP side signal distribution paths 111 - 114 (step S5 in Fig. 4). Thus, a load distribution is made in the IP network side.

The distributed signals are entered into each signaling gateway processors 11 - 14 in the gateway 1 (step S6 in Fig. 4), and are transformed by the corresponding signaling gateway processors 11 - 14 (IF network side signal -> SS7 signal network side signal). Then, the transformed signals are sent to the SS7 signal network 100 via the corresponding SS7 side signal distribution paths 101 - 104 (step S7 in Fig. 4). As described above, the load distribution is performed in a normal state.

However, when, for example, a fault occurs in a network, it is impossible to perform an operation normally only by using the procedures mentioned above. Therefore, the SG common management unit 2 uses some kinds of tables to manage states of the signaling gateway processors 11 - 14 and a state of a network (for example, state of network unavailable). When the SG common management unit 2 receives information, the unit 2 creates a routing table by using the information and sends the contents of the routing table to the signaling gateway processors 11 - 14 to designate a destination. Examples of the operations are explained hereinafter.

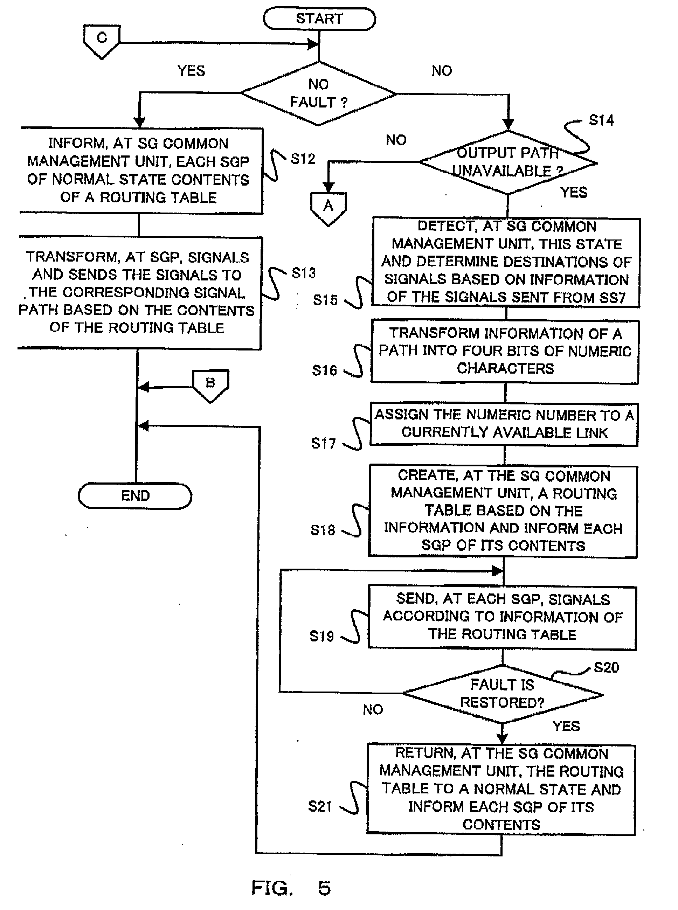

First, description is made about an example of operation when a fault does not occur in the network. If there is no trouble in the network (step S11 in Fig. 5), the SG common management unit 2 uses a path to be used in a normal state (that is, a path selected when any alternate paths are not used), and sends normal state contents of the routing table to the signaling gateway processors 11 - 14 (step S12 in Fig. 5). Thereby, the signaling gateway processors 11 - 14 store information which is included in the routing table and related to each of the signaling gateway processors 11 - 14, in an input/output management table, and then, performs a routing operation by using the information.

For example, a route from the SS7 signal network 100 to the agent 3 through the signaling gateway processor 11 is determined as a route from the SS7 signal network 100, then through the SS7 side signal distribution path 101, then through the signaling gateway processor 11, then through the IP side signal distribution path 111, and finally to the agent 3.

In this case, the signaling gateway processor 11 transforms signals sent from the SS7 signal network 100 through the SS7 side signal distribution path (sln0) 101, and sends the transformed signals to the corresponding IP side signal distribution path (StID0) 111 (step S13 in Fig. 5).

Next, it is assumed that the IP side signal distribution paths 111 and 112 (that is, output side paths) axe unavailable due to a fault. In this case, the SG common management unit 2 detects an occurrence of the fault, and determines destinations of signals based on SLS information included in the signals which are distributed at the SS7 side and sent from the SS7 side signal distribution path 101 (steps S14 and S15 in Fig. 5).

Specifically, the SG common management unit 2 transforms four bits of the SLS information into numeric character (step S16 in Fig. 5). Therefore, a numeric character range of 1 to 15 can be obtained. Then, the SG common management unit 2, for example, cyclically assigns the numeric character to all links which are available at present (step S17 in Fig, 5). Also, the assignment is not always performed cyclically. The assignment can be adjusted so that similar number of numeric characters are assigned to each link (destination of assignment).

Herein, since the IP side signal distribution paths 113 and 114 are available, signals in which the SLS information is transformed to 0, 2, 4, 6, 8, 10, 12, and 14 are entered into the IP side signal distribution path 113, and signals in which the SLS information is transformed to 1, 3, 5, 7, 9, 11, 13, and 15 are entered into the IP side signal distribution path 114.

The SG common management unit 2 creates the routing table based on the information and sends contents of the routing table to the signaling gateway processors 11 - 14 (step S18 in Fig. 5). Therefore, the signaling gateway processors 11 - 14 sends signals according to the information included in the routing table (step S19 in Fig. 5).

As described above, even if guarantee of an order of sending signals is required, the order of sending is kept since the SLS information included in the signals is not changed. Herein, if it is assumed that a value of the SLS information included in a signal sent from the SS7 side signal distribution path 101 is 12, it is determined that the signal is sent through the IP side signal distribution path 113. Then, the SG common management unit 12 creates the routing table.

In this case, the signals are sent along an alternate path, that is, from the SS7 signal network 100, then through the SS7 side signal distribution path 101, then through the signaling gateway processor 11, then through the signaling gateway processor 13, then through the IP side signal distribution path 113, and finally to the agent 3. Also, in this case, the signals are transferred without a call loss.

Herein, the signaling gateway processor 11 transforms signals, after the transformation, the signals are sent to the signaling gateway processor 13 connected to the IP side signal distribution path (StID2) 113 as shown in Fig. 1. Then, the signaling gateway processor 13 simply sends the received signals to the IP side signal distribution path 113. Thereby, a switching function is performed. Also, since the signal transforming function is not performed by the signaling gateway processor 13 in the alternate path, but by the signaling gateway processor 11 related to the input path 101, abilities of the signaling gateway processors 11 - 14 are not wasted.

When the fault is restored (step S20 in Fig. 5), the SG common management unit 2 returns the routing table to a normal state, and sends the contents to the signaling gateway processors 11 - 14 (step S21 in Fig. 5). Thereby, a returning function to return the signaling gateway processors 11 - 14 to a normal state can be provided.

On the other hand, when signals are sent from the agent 3 to the SS7 signal network 100 through the signaling gateway processor 11, if a fault occurs at the SS7 side signal distribution paths 101 and 102 (that is, output side paths), the SG common management unit 2 creates a routing table by using the SLS information as a key and sends the contents to the signaling gateway processors 11 - 14.

Therefore, the above mentioned switching function can be also performed about the route from the agent 3 to the SS7 signal network 100. Also, when the fault is restored, the SG common management unit 2 recognizes the restoration, and provides a returning function by returning the routing table to a normal state.

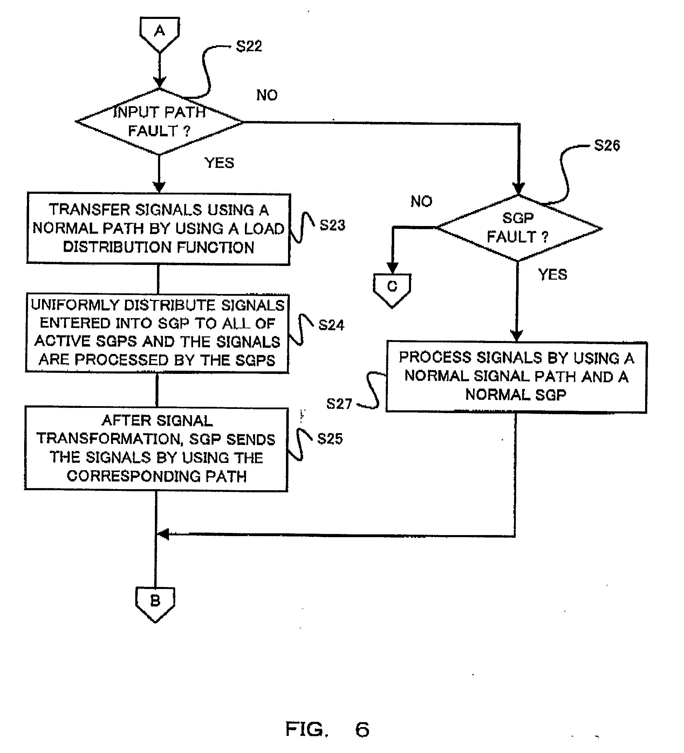

Next, description is made about an example of an operation when a fault occurs on an input path. For example, in a route (from the SS7 signal network 100 to the agent 3 via the signaling gateway processor 11), it is assumed that a fault occurs in the SS7 side signal distribution paths 101 and 102. In this case, signals are transferred via the SS7 side signal distribution paths 103 and 104 by a load distribution function (steps S22 and S23 in Fig. 6).

Herein, when the signals are transformed by the signaling gateway processors 13 and 14 which correspond to the SS7 side signal distribution paths 103 and 104, the signaling gateway processors 13 and 14 must process signals which are normally sent from the SS7 side signal distribution paths 103 and 104 and signals which are to be transferred via the SS7 side signal distribution paths 101 and 102, as a result, a load of the processors 13 and 14 becomes serious. Also, since the signaling gateway processors 11 and 12 remain idle, a utilization ratio of the signaling gateway processors 11 - 14 is degraded as a whole.

To overcome this problem, when a fault occurs in an input path, the SG common management unit 2 equally distributes signals which are sent via available input paths, to all active signaling gateway processors 11 - 14 (step S24 in Fig. 6). Thereby, it is possible to prevent the above degradation of the utilization ratio. In this case, SLS is also used as a key to assign each signal to the signaling gateway processors 11 - 14.

After the signaling gateway processors 11 -14 transform the signals, the processors 11 - 14 transfer the signals by using the corresponding path which is to be used in a normal state (the IP side signal distribution paths 111 - 114) (step S25 in Fig. 6). Also, when a route (from the agent 3 to the SS7 signal network 100 via the signaling gateway processor 11) is used, a similar process is performed and therefore, it is capable of preventing the degradation of the utilization ratio.

Finally, description is made about an example of an operation when a fault occurs on the signaling gateway processors 11 - 14. When a fault occurs on the signaling gateway processors 11 - 14 (step S26 in Fig. 6), an input path and an output path corresponding to the processor in which a fault occurs, become unavailable. That is, a process of the signals must be performed by using the remaining normal signal paths and the remaining normal signaling gateway processors 11 - 14 (step S27 in Fig. 6). In this case, similar to the above case, the SLS and the routing table are used, and the signals are distributed to available signaling processors 11 - 14 when a fault occurs on an input path.

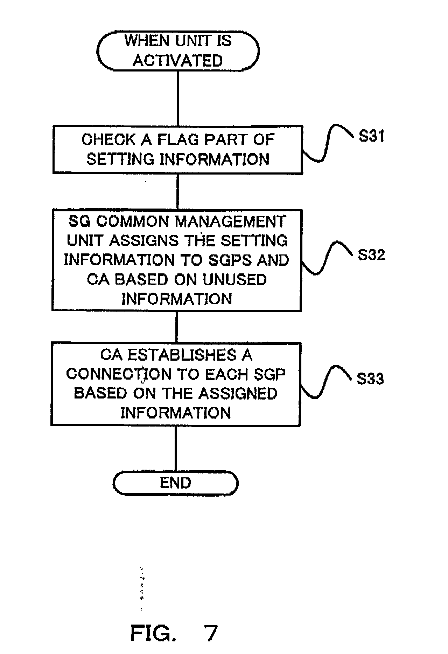

In addition, the SG common management unit 2 automatically assigns setting information. For example, in a case where the configuration shown in Fig. 1 is used, the SG common management unit 2 assigns the setting information to the signaling gateway processors 11 - 14 and the agent 3 when the unit 2 is activated. For instance, if an IP address and a port number are assigned, the SG common management unit 2 checks a flag part of a setting information file (see Fig. 2) stored in the unit 2 (step S31 in Fig. 7).

Herein, unused information is denoted by "0"'. The SG common management unit 2 assigns the setting information to the signaling gateway processors 11 - 14 and the agent 3 based on the unused information (step S32 in Fig. 7). Then, the agent 3 can establish a connection to the signaling gateway processors 11 - 14 based on the assigned information (step S33 in Fig. 7). Also, by using the above function, the signaling gateway processors 11 - 14 and the agent 3 are not required to perform a conventional setting of address information in each unit and a duplication check of the setting information.

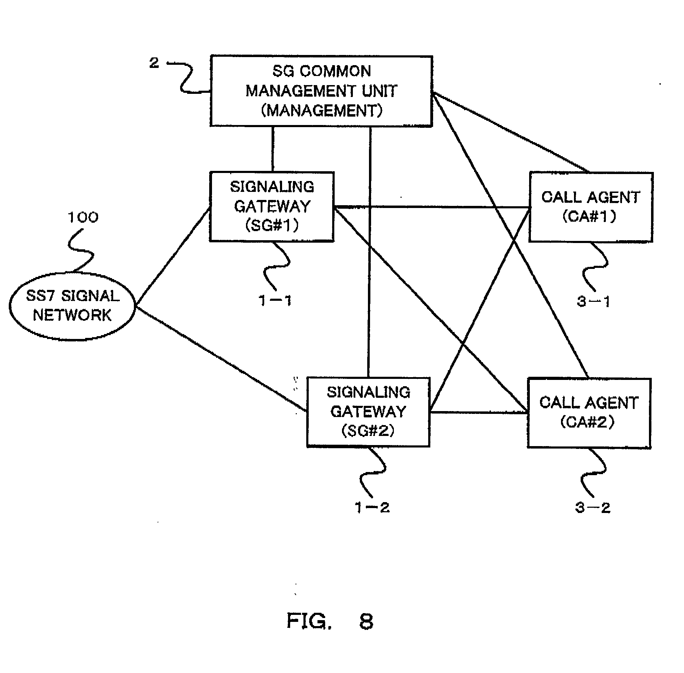

Fig. 8 shows a block diagram representing a network structure according to a second embodiment of the invention. In Fig. 8, the network is composed of an SS7 signal network 100, gateways (SG#1, SG#2) 1-1, 1-2, an SG common management unit 2, and agents (CA#1, CA#2) 3-1, 3-2. The SG common management unit 2 has information (including address information or the like) about the gateways 1-1, 1-2, and agents 3-1, 3-2, and other information (including state information or the like) about the gateways 1-1, 1-2, and agents 3-1, 3-2.

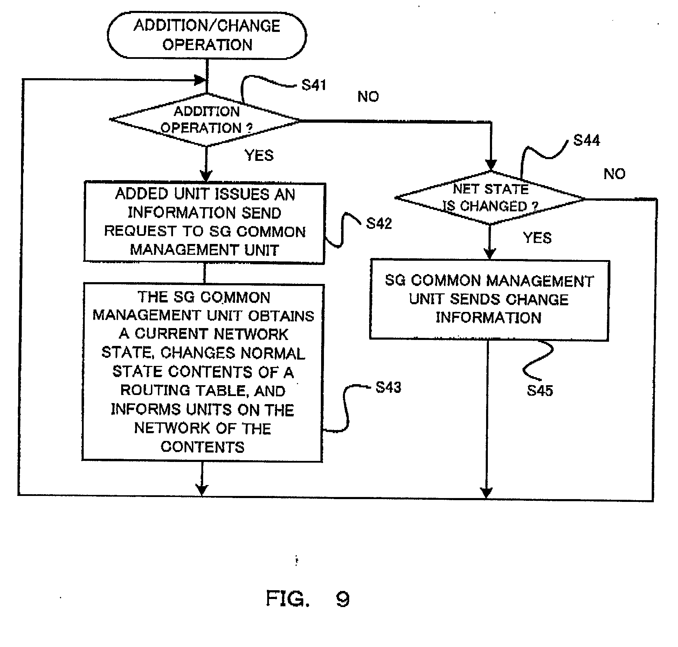

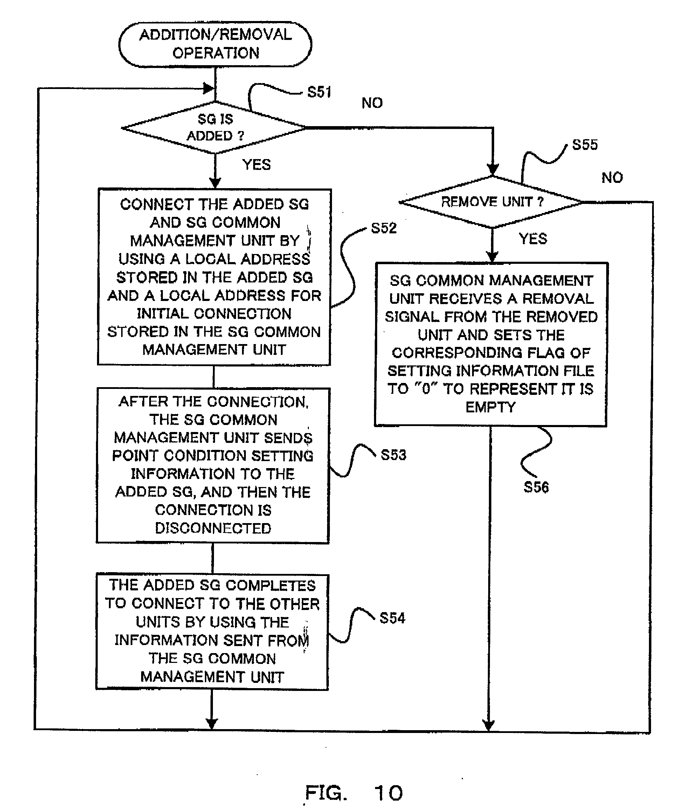

Fig. 9 and Fig. 10 represent a flowchart of operations on the network according to the second embodiment of the invention. Then, description is made about the operation on the network with reference to Figs. 8 - 10.

The SG common management unit 2 uniformly manages information about the gateways 1-1, 1-2, and the agents 3-1, 3-2. For example, in the network structure shown in Fig. 8, if the network includes the SS7 signal network 100, the gateway 1-1, the SG common management unit 2, and the agents 3-1, 3-2 at an initial state, the SG common management unit 2 possesses information about the gateway 1-1, and agents 3-1, 3-2.

In this case, when the gateway 1-2 is added to the network (step S41 in Fig. 9), in a conventional management method, the gateway 1-2 must collect and possess information about the gateway 1-1 and the agents 3-1, 3-2.

However, according to the invention, the added gateway 1-2 can immediately commence a process on the network, since if the added gateway 1-2 once issues an information send request to the SG management unit 2 (step S42 in Fig. 9), a current network state (addresses used to communicate with the gateway 1-1 and the agents 3-1, 3-2, states (active, inactive pause, and the like) of the gateway 1-1 and the agents 3-1, 3-2, and the like) can be obtained (step S43 in Fig. 9).

After that, whenever a state of the network is changed (addition, removal, or replacement of the gateways 1-1, 1-2 and the agents 3-1, 3-2)(step S44 in Fig. 9), information can be received from the SG common management unit 2 (step S45 in Fig. 9). Therefore, for example, when a fault occurs in the gateway 1-1, the gateway 1-2 immediately starts a function of the gateway 1-1 instead of the gateway 1-1. As a result, an ACT-STNDBY system is realized and it is possible to build a flexible network.

Next, in the network structure shown in Fig. 8, an example of addition of the gateway 1-2 to the network is shown. In this case, it is assumed that the existing network includes the SS7 signal network 100, the gateway 1-1, the SG common management unit 2, and the agents 3-1, 3-2, and the gateway 1-2 is added to the network.

When the gateway 1-2 is added to the network, first, the gateway 1-2 and the SG common management unit 2 are connected by using a temporary local address of the gateway 1-2 and a fixed local address for initial connection of the SG common management unit 2 (steps S51 and S52 in Fig. 10).

After the connection, the SG common management unit 2 sends point condition setting information to the gateway 1-2, then, the connection between the gateway 1-2 and the SG common management unit 2 is disconnected (step S53 in Fig. 10). The gateway 1-2 completes to connect to the other unit at an activation of the gateway 1-2, based on the point condition setting information sent from the SG common management unit 2 (step SS4 in Fig. 10).

In a case where a unit is removed from the existing network (step S55 in Fig. 10), when the SG common management unit 2 receives a removal signal from the removed unit, the unit 2 set a flag of the setting information file corresponding to the removed unit, to "0" (step S56 in Fig. 10). By using this function, it is possible to reuse the setting information file. Also, it is possible to perform a plug and play function when a unit is added or removed.

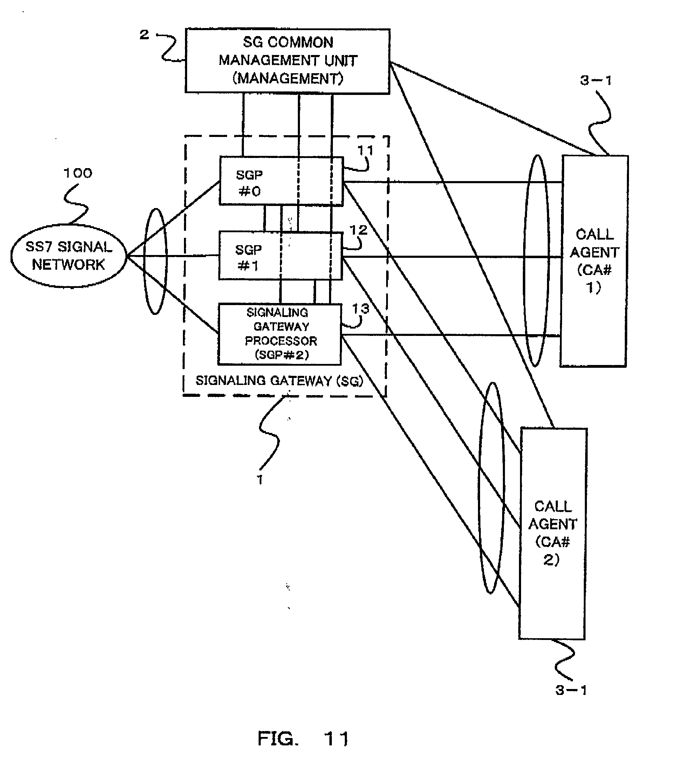

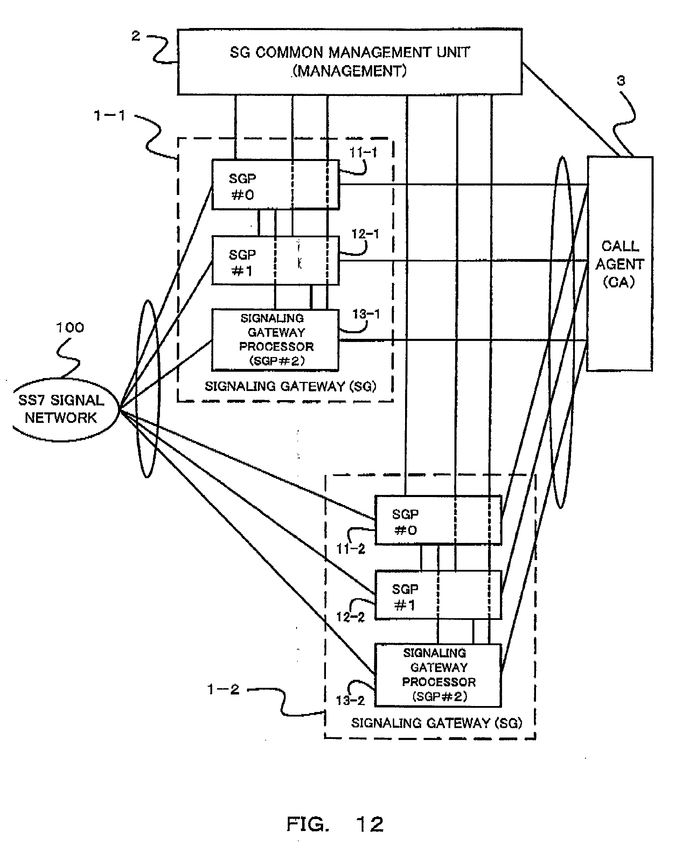

Fig. 11 shows a signal path when an agent is added to the network of the second embodiment of the invention. Fig. 12 shows a signal path when a gateway is added to the network of the second embodiment of the invention.

Then, description is made about a load distribution on the network of the second embodiment of the invention, with reference to Figs. 11 and 12.

In this embodiment, reusing of the setting information file and possession of the plug and play function are mainly described, but the SG common management unit 2 also have the above mentioned load distribution function according to the invention. Therefore, when the agent 3-2 is added to the network as shown in Fig. 11, or when the gateway 1-2 is added to the network as shown in Fig. 12, it is possible to easily realize the additions as described above.

In these cases, since signal paths are increased among the SS7 signal network 100, the gateways 1, 1-1, 1-2, and the agents 3, 3-1, 3-2, the load distribution is further promoted. Therefore, an addition, a removal, or a replacement of the gateways 1, 1-1, 1-2, or the agents 3, 3-1, 3-2 can be performed by reusing the setting information file or by using the plug and play function, based on which signal path is intend to be increased.

As described above, it is capable of providing a scalable signaling gateway function by realizing the load distribution, the switching function, and the returning function and also of increasing a performance of the signaling gateway.

Further, it is possible to easily add, remove, or replace the gateways 1, 1-1, 1-2, and the agents 3, 3-1, 3-2, by sharing information of the gateways 1, 1-1, 1-2, and the agents 3, 3-1, 3-2. Thereby, an ACT-STANDBY structure can be immediately realized and a flexible network structure can be built.

Still further, by using a function of automatically assigning the setting information of the SG common management unit 2, addition or removal can be performed without having an initial point condition setting file about the gateways 1, 1-1, 1-2, and the agents 3, 3-1, 3-2 in the network, and without aware of setting information of the existing network.

Also, in the second embodiment, although description is made when there are a plurality of paths from the SS7 signal network 100 and there are a plurality of paths from the agent 3, the load distribution can be carried out by distributing signals to a plurality of the signaling gateway processors 11 - 14 even if input signals are provided from only a broadband communication line.

Therefore, according to the invention, it is capable of (1) realizing a scalable function by incorporating a load distribution function, a switching function, and a returning function, (2) easily increasing a system volume by arranging IP network connecting abilities of a signaling gateway network in a stacked form, (3) easily performing an addition or a removal by maintaining a management part uniformly, (4) easily configuring a flexible network structure such as an ACT-STANDBY system, (5) enabling each unit not to have setting information by automatically assigning the setting information in building a network structure, (6) easily performing an addition or a removal by using a plug and play function, and (7) realizing further load distribution when a unit is added to the network.

As described above, according to the invention, in a gateway system including a signaling gateway connecting the existing telephone network and an IP network and a call agent used to input/output in the IP network, a scalable function is realized and its performance is improved by placing, in the signaling gateway, a plurality of singling gateway processors each of which performs a bi-directional transformation of signals between the existing telephone network and the IP network, and by uniformly managing information required to perform the bi-directional transformation at a common management unit.

## Claims

1. A gateway system which uses at least one signaling gateway (1) connecting an existing telephone network and an IP (Internet Protocol) network, comprising:
a plurality of signal transform units (11 - 14) each of which is included in one of the signaling gateways (1) and performs mutual transformation of signals between the existing telephone network and the IP network; and
a common management unit (2) which collectively manages Information required for the mutual transformation performed by each signal transform unit (11 - 14).

2. The gateway system of claim 1, wherein the common management unit (2) is configured to perform a load distribution of the plurality of signal transform units (11 - 14), switching among the plurality of signal transform units (11 - 14) when a fault occurs, and returning to an initial state.

3. The gateway system of claim 1, wherein the common management unit (2) includes a function to individually assign setting information to the signaling gateways (1).

4. The gateway system of claim 3, wherein the setting information includes address information used to communicate with the other signaling gateways (1) and operation states of the signaling gateways (1) on a network.

5. The gateway system of claim 3, wherein the common management unit (2) generates the setting information according to addition, removal, and replacement of the signaling gateway (1).

6. The gateway system of claim 1, wherein the common management unit (2) performs a distributing operation of transformation processes to the plurality of signal transform units (11 - 14) and a routing operation to each of the plurality of signal transform units (11 - 14), in response to an occurrence of a fault in an input/output path of the signaling gateway (1) or an occurrence of a fault in each of the plurality of signal transform units (11 - 14).

7. The gateway system of claim 6, wherein the common management unit (2) is configured to distribute destinations of results of the transformation processes of the plurality of signal transform units (11 - 14), when a fault occurs in an output path of the signaling gateway (1).

8. The gateway system of claim 6, wherein the common management unit (2) is configured to distribute processes of signals sent from available input paths to the plurality of signal transform units (11 - 14), and control so that each result of the processes is supplied to an output path corresponding to the signal transform unit (11 - 14) deriving the result, when a fault occurs in an input path of the signaling gateway (1).

9. The gateway system of claim 6, wherein the common management unit (2) is configured to distribute processes of signals sent from available input paths to available signal transform units (11 - 14), and control so that each result of the processes is supplied to an output path corresponding to the signal transform unit (11 - 14) deriving the result, when a fault occurs in any of the plurality of signal transform units (11 - 14).

10. A gateway system comprising:
n (n is greater than or equal to one) of signaling gateways (1) which connect an existing telephone network and an IP (Internet Protocol) network;
m (m is greater than or equal to one) of call agents (3) which perform a call control on the IP network by using an interface for the existing telephone network;
a plurality of signal transform units (11 - 14) each of which is included in one of the n of signaling gateways (1) and performs mutual transformation of signals between the existing telephone network and the IP network; and
a common management unit (2) which collectively manages information required for the mutual transformation performed by each signal transform unit (11 - 14).

11. The gateway system of claim 10, wherein the common management unit (2) is configured to perform a load distribution of the plurality of signal transform units (11 - 14), switching among the plurality of signal transform units (11 - 14) when a fault occurs, and returning to an initial state.

12. The gateway system of claim 10, wherein the common management unit (2) includes a function to individually assign setting information to the n of signaling gateways (1) and the m of call agents (3).

13. The gateway system of claim 12, wherein the setting information includes address information used to communicate with the other signaling gateways (1) and the other call agents (3), and operation states of the signaling gateways (1) and the call agents (3) on a network.

14. The gateway system of claim 12, wherein the common management unit (2) generates the setting information according to addition, removal, and replacement of the signaling gateways (1) and the call agents (3).

15. The gateway system of claim 10, wherein the common management unit (2) performs a distributing operation of transformation processes to the plurality of signal transform units (11 - 14) and a routing operation to each of the plurality of signal transform units (11 - 14), in response to an occurrence of a fault in an input/output path of the signaling gateway (1) or an occurrence of a fault in each of the plurality of signal transform units (11 - 14).

16. The gateway system of claim 15, wherein the common management unit (2) is configured to distribute destinations of results of the transformation processes of the plurality of signal transform units (11 - 14), when a fault occurs in an output path of the signaling gateway (1).

17. The gateway system of claim 15, wherein the common management unit (2) is configured to distribute processes of signals sent from available input paths to the plurality of signal transform units (11 - 14), and control so that each result of the processes is supplied to an output path corresponding to the signal transform unit (11 - 14) deriving the result, when a fault occurs in an input path of the signaling gateway (1).

18. The gateway system of claim 15, wherein the common management unit (2) is configured to distribute processes of signals sent from available input paths to available signal transform units (11 - 14), and control so that each result of the processes is supplied to an output path corresponding to the signal transform unit (11 - 14) deriving the result, when a fault occurs in any of the plurality of signal transform units (11 - 14).

19. A gateway system comprising;
n (n is greater than or equal to one) of signaling gateways (1) which connect an existing telephone network and an IP (Internet Protocol) network;
m (m is greater than or equal to one) of call agents (3) which perform a call control on the IP network by using an interface for the existing telephone network; and
a common management unit (2) which individually assigns setting information to the n of signaling gateways (1) and the m of call agents (3).

20. The gateway system of claim 19, wherein the setting information includes address information used to communicate with the other signaling gateways (1) and the other call agents (3), and operation states of the signaling gateways (1) and the call agents (3) on a network.

21. The gateway system of claim 19, wherein the common management unit (2) generates the setting information according to addition, removal, and replacement of the signaling gateways (1) and the call agents (3).

22. An integrated management method of a gateway system which uses at least one signaling gateway (1) connecting an existing telephone network and an IP (Internet Protocol) network, the method comprising the steps of:
mutually transforming, at a plurality of signal transform units (11 - 14) each of which is included in one of the signaling gateways (1), signals between the existing telephone network and the IP network; and
collectively managing information required for the mutual transformation.

23. The method of claim 22, wherein the managing step performs a load distribution of the plurality of signal transform units (11 - 14), switching among the plurality of signal transform units (11 - 14) when a fault occurs, and returning to an initial state.

24. The method of claim 22, wherein the managing step individually assigns setting information to the signaling gateways (1).

25. The method of claim 24, wherein the setting information includes address information used to communicate with the other signaling gateways (1) and operation states of the signaling gateways (1) on a network.

26. The method of claim 24, wherein the managing step generates the setting information according to addition, removal, and replacement of the signaling gateway (1).

27. The method of claim 22, wherein the managing step performs a distributing operation of transformation processes to the plurality of signal transform units (11 - 14) and a routing operation to each of the plurality of signal transform units (11 - 14), in response to an occurrence of a fault in an input/output path of the signaling gateway (1) or an occurrence of a fault in each of the plurality of signal transform units (11 - 14).

28. The method of claim 27, wherein the managing step distributes destinations, of results of the transformation processes of the plurality of signal transform units (11 - 14), when a fault occurs in an output path of the signaling gateway (1).

29. The method of claim 27, wherein the managing step distributes processes of signals sent from available input paths to the plurality of signal transform units (11 - 14), and controls so that each result of the processes is supplied to an output path corresponding to the signal transform unit (11 - 14) deriving the result, when a fault occurs in an input path of the signaling gateway (1).

30. The method of claim 27, wherein the managing step distributes processes of signals sent from available input paths to available signal transform units (11 - 14), and controls so that each result of the processes is supplied to an output path corresponding to the signal transform unit (11 - 14) deriving the result, when a fault occurs in any of the plurality of signal transform units (11 - 14).

31. An integrated management method of a gateway system which includes n (n is greater than or equal to one) of signaling gateways (1) which connect an existing telephone network and an IP (Internet Protocol) network, and m (m is greater than or equal to one) of call agents (3) which perform a call control on the IP network by using an interface for the existing telephone network, the method comprising the steps of;
mutually transforming, at a plurality of signal transform units (11 - 14) each of which is included in one of the n of signaling gateways (1), signals between the existing telephone network and the IP network; and
collectively managing information required for the mutual transformation.

32. The method of claim 31, wherein the managing step performs a load distribution of the plurality of signal transform units (11 - 14), switching among the plurality of signal transform units (11 - 14) when a fault occurs, and returning to an initial state.

33. The method of claim 31, wherein the managing step individually assigns setting information to the n of signaling gateways (1) and the m of call agents (3).

34. The method of claim 33, wherein the setting information includes address information used to communicate with the other signaling gateways (1) and the other call agents (3), and operation states of the signaling gateways (1) and the call agents (3) on a network.

35. The method of claim 33, wherein the managing step generates the setting Information according to addition, removal, and replacement of the signaling gateways (1) and the call agents (3).

36. The method of claim 31, wherein the managing step performs a distributing operation of transformation processes to the plurality of signal transform units (11 - 14) and a routing operation to each of the plurality of signal transform units (11 - 14), in response to an occurrence of a fault in an input/output path of the signaling gateway (1) or an occurrence of a fault in each of the plurality of signal transform units (11-14).

37. The method of claim 36, wherein the managing step distributes destinations of results of the transformation processes of the plurality of signal transform units (11 - 14), when a fault occurs in an output path of the signaling gateway (1).

38. The method of claim 36, wherein the managing step distributes processes of signals sent from available input paths to the plurality of signal transform units (11 - 14), and controls so that each result of the processes is supplied to an output path corresponding to the signal transform unit (11 - 14) deriving the result, when a fault occurs in an input path of the signaling gateway (1).

39. The method of claim 36, wherein the managing step distributes processes of signals sent from available input paths to available signal transform units (11 - 14), and controls so that each result of the processes is supplied to an output path corresponding to the signal transform unit (11 - 14) deriving the result, when a fault occurs in any of the plurality of signal transform units (11 - 14).

40. An integrated management method of gateway system which uses n (n is greater than or equal to one) of signaling gateways (1) which connect an existing telephone network and an IP (Internet Protocol) network, and m (m is greater than or equal to one) of call agents (3) which perform a call control on the IP network by using an interface for the existing telephone network, the method comprising the step of:
individually assigning setting information to the n of signaling gateways (1) and the m of call agents (3).

41. The method of claim 40, wherein the setting information includes address information used to communicate with the other signaling gateways (1) and the other call agents (3), and operation states of the signaling gateways (1) and the call agents (3) on a network.

42. The method of claim 40, wherein the assigning step generates the setting information according to addition, removal, and replacement of the signaling gateways (1) and the call agents (3).

43. A recording medium readable by a computer, tangibly embodying a program of instructions executable by the computer to perform an integrated management method of a gateway system which uses at least one signaling gateway (1) connecting an existing telephone network and an IP (Internet Protocol) network, the method comprising the steps of:
mutually transforming, at a plurality of signal transform units (11 - 14) each of which is included in one of the signaling gateways (1), signals between the existing telephone network and the IP network; and
collectively managing information required for the mutual transformation.

44. A computer data signal embodied in a carrier wave and representing a sequence of instructions which, when executed by a processor, cause the processor to perform an integrated management method of a gateway system which uses at least one signaling gateway (1) connecting an existing telephone network and an IP (Internet Protocol) network, the method comprising the steps of;
mutually transforming, at a plurality of signal transform units (11 - 14) each of which is included in one of the signaling gateways (1), signals between the existing telephone network and the IP network; and
collectively managing information required for the mutual transformation.

45. A program product comprising, computer readable instructions and a recording medium bearing the computer readable instructions, the instructions being adaptable to enable a computer to perform an integrated management method of a gateway system which uses at least one signaling gateway (1) connecting an existing telephone network and an IP (Internet Protocol) network, the method comprising the steps of:
mutually transforming, at a plurality of signal transform units (11 - 14) each of which is included in one of the signaling gateways (1), signals between the existing telephone network and the IP network; and
collectively managing information required for the mutual transformation.

46. A recording medium readable by a computer, tangibly embodying a program of instructions executable by the computer to perform an integrated management method of a gateway system which includes n (n is greater than or equal to one) of signaling gateways (1) which connect an existing telephone network and an IP (Internet Protocol) network, and m (m is greater than or equal to one) of call agents (3) which perform a call control on the IP network by using an interface for the existing telephone network, the method comprising the steps of;
mutually transforming, at a plurality of signal transform units (11 - 14) each of which is included in one of the n of signaling gateways (1), signals between the existing telephone network and the IP network; and
collectively managing information required for the mutual transformation.

47. A computer data signal embodied in a carrier wave and representing a sequence of instructions which, when executed by a processor, cause the processor to perform an integrated management method of a gateway system which includes n (n is greater than or equal to one) of signaling gateways (1) which connect an existing telephone network and an IP (Internet Protocol) network, and m (m is greater than or equal to one) of call agents (3) which perform a call control on the IP network by using an interface for the existing telephone network, the method comprising the steps of;
mutually transforming, at a plurality of signal transform units (11 - 14) each of which is included in one of the n of signaling gateways (1), signals between the existing telephone network and the IP network; and
collectively managing information required for the mutual transformation.

48. A program product comprising, computer readable instructions and a recording medium bearing the computer readable instructions, the instructions being adaptable to enable a computer to perform an integrated management method of a gateway system which includes n (n is greater than or equal to one) of signaling gateways (1) which connect an existing telephone network and an IP (Internet Protocol) network, and m (m is greater than or equal to one) of call agents (3) which perform a call control on the IP network by using an interface for the existing telephone network, the method comprising the steps of;
mutually transforming, at a plurality of signal transform units (11 - 14) each of which is included in one of the n of signaling gateways (1), signals between the existing telephone network and the IP network; and
collectively managing information required for the mutual transformation.

49. A recording medium readable by a computer, tangibly embodying a program of instructions executable by the computer to perform an integrated management method of gateway system which uses n (n is greater than or equal to one) of signaling gateways (1) which connect an existing telephone network and an IP (Internet Protocol) network, and m (m is greater than or equal to one) of call agents (3) which perform a call control on the IP network by using an interface for the existing telephone network, the method comprising the step of:
individually assigning setting information to the n of signaling gateways (1) and the m of call agents (3).

50. A computer data signal embodied in a carrier wave and representing a sequence of instructions which, when executed by a processor, cause the processor to perform an integrated management method of gateway system which uses n (n is greater than or equal to one) of signaling gateways (1) which connect an existing telephone network and an IP (Internet Protocol) network, and m (m is greater than or equal to one) of call agents (3) which perform a call control on the IP network by using an interface for the existing telephone network, the method comprising the step of:
individually assigning setting information to the n of signaling gateways (1) and the m of call agents (3).

51. A program product comprising, computer readable instructions and a recording medium bearing the computer readable instructions, the instructions being adaptable to enable a computer to perform an integrated management method of gateway system which uses n (n is greater than or equal to one) of signaling gateways (1) which connect an existing telephone network and an IP (Internet Protocol) network, and m (m is greater than or equal to one) of call agents (3) which perform a call control on the IP network by using an interface for the existing telephone network, the method comprising the step of:
individually assigning setting information to the n of signaling gateways (1) and the m of call agents (3).
